# EUROPÄISCHE PATENTANMELDUNG

(11) **EP 1 267 466 A2**
(43) Veröffentlichungstag der Anmeldung: **18.12.2002**
(21) Anmeldenummer: 02009963.6
(22) Anmeldetag: 03.05.2002
(51) Int. Cl.: H02H 3/24

(54) **Unterspannungsauslöseschaltung**

(30) Priorität: 12.06.2001 DE 10128328
(71) Anmelder: Heinrich Kopp AG, 63796 Kahl am Main (DE)
(72) Erfinder: Holscher, Norbert, 63636 Brachtal (DE); Kunkel, Werner, 63825 Westermgrund (DE)
(74) Vertreter: Reinhard - Skuhra - Weise & Partner

(57) **Zusammenfassung**

Unterspannungsauslöseschaltung mit einer Unterspannungsauslösespule (9), die durch einen hindurchfließenden Halte-Spulenstrom gehalten wird, und mit einer Spulenstromüberwachungsschaltung (21), die bei einem Abfallen des durch die Unterspannungsauslösespule (9) hindurchfließenden Halte-Spulenstromes das Abfallen des Halte-Spulenstromes beschleunigt.

## Beschreibung

Die Erfindung betrifft eine Unterspannungsauslöseschaltung zum Auslösen eines mechanischen Bauelements, und insbesondere eine Unterspannungsauslöseschaltung zum Auslösen eines ein- oder mehrpoligen Leitungsschutzschalters.

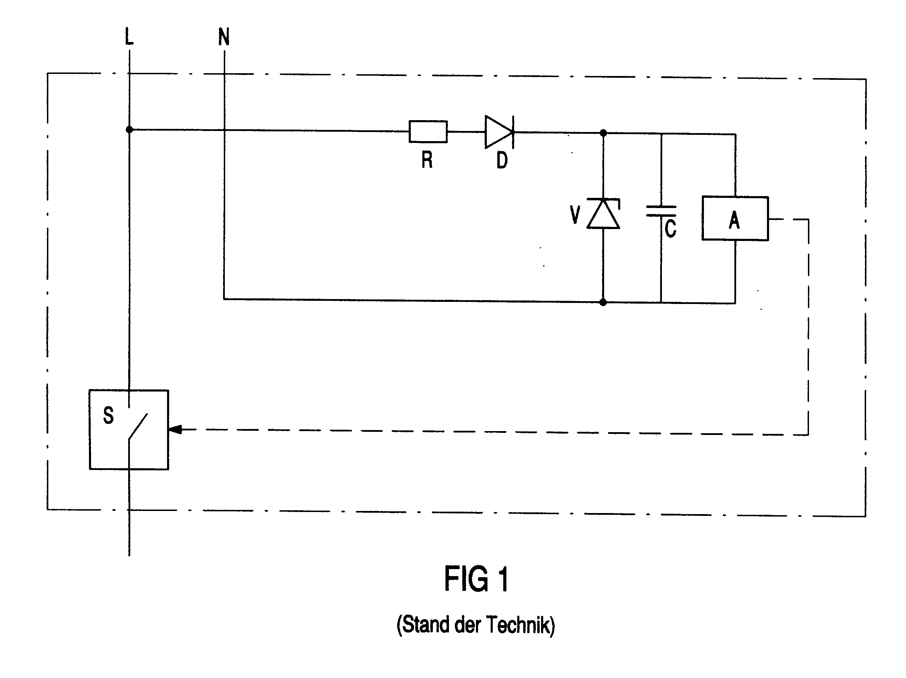

Fig. 1 zeigt einen einpoligen Leitungsschutzschalter mit Unterspannungsauslöser nach dem Stand der Technik. Der Unterspannungsauslöser ist an einen Phasenleiter L und einen Neutralleiter N angeschlossen. Die zwischen dem Phasenleiter L und dem Neutralleiter N anliegende Wechselspannung wird mittels eines Widerstandes R und einer Gleichrichterdiode D gleichgerichtet, wobei die gleichgerichtete Wechselspannung einen Kondensator C auflädt. Parallel zu dem Kondensator C ist eine Unterspannungsauslösespule A geschaltet, die zum Auslösen eines ein- oder mehrpoligen Schalters S vorgesehen ist. Die gleichgerichtete und durch den Kondensator C geglättete Spannung liefert eine Betriebsgleichspannung U_{B} für die Unterspannungsauslösespule A. Diese Betriebsgleichspannung U_{B} erzeugt einen durch die Unterspannungsauslösespule A fließenden Haltestrom I_{N}. Eine Zehner-Diode V dient der Spannungsbegrenzung. Fällt die Netzspannung zwischen Phasenleiter L und Neutralleiter N unterhalb eines Schwellenwertes SW ab, sinkt die erzeugte Versorgungsgleichspannung und der Haltestrom, der durch die Auslösespule A fließt, fällt ab. Sobald der Haltstrom I_{H} einen unteren Schwellenwert erreicht hat, löst die Unterspannungsauslösespule A aus und öffnet die bis dahin geschlossenen Schalter der Schalteinrichtung S. Neben dem Auslösen eines mechanischen Bauelements kann die Unterspannungsauslösespule A auch eine Fehlermeldung an eine entfernte zentrale Steuerung abgeben.

Ein Nachteil der Unterspannungsauslöseschaltung nach dem Stand der Technik, wie sie in Fig. 1 dargestellt ist, besteht darin, dass der Halte-Spulenstrom I_{H}, der durch die Unterspannungsauslösespule A fließt, von dem Innenwiderstand und den magnetischen Eigenschaften der Unterspannungsauslösespule A abhängt. Der Haltestrom hängt somit stark von den Fertigungstoleranzen der Unterspannungsauslösespule A ab.

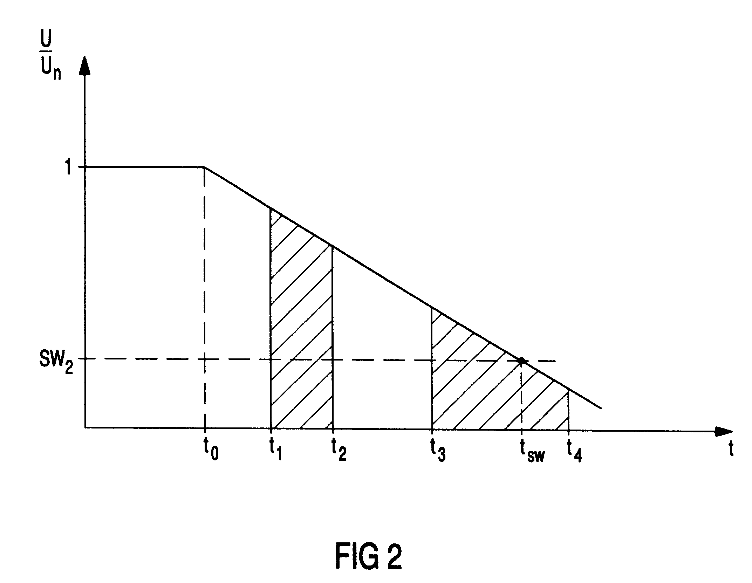

Fig. 2 zeigt die zeitlichen Abschaltgrenzen bei einer Unterspannungsauslöseschaltung nach dem Stand der Technik. Bei dem in Fig. 2 dargestellten beispielhaften Zeitverlauf ist die Spannung U zwischen dem Phasenleiter L und dem Neutralleiter zunächst gleich der nominalen Netzspannung, z.B. 230 Volt. Zu einem Zeitpunkt t₀ sinkt in dem gegebenen Beispiel die Spannung zwischen dem Phasenleiter L und dem Neutralleiter N ab, so dass die Betriebsleitspannung für die Unterspannungsauslösespule A ebenfalls absinkt. Der durch die Unterspannungsauslösespule fließende Haltstrom I_{H} verringert sich demzufolge, wobei es zu einem Zeitpunkt t₃ bei einer ersten Auslösespule A zu einem Auslösevorgang kommt. Aufgrund von Fertigungstoleranzen der Unterspannungsauslösespule A löst die Unterspannungsauslöseschaltung nach dem Stand der Technik u.U. allerdings erst bei einem Zeitpunkt t₄ aus. Sicherheitsvorschriften erfordern jedoch ein Auslösen der Unterspannungsauslöseschaltung spätestens nachdem die momentane Spannung zwischen dem Phasenleiter L und dem Neutralleiter N einen unteren Stellenwert SW erreicht hat. Wie man aus Fig. 2 erkennen kann, erfolgt der Auslösevorgang bei der Unterspannungsauslöseschaltung, die eine Unterspannungsauslösespule A mit ungünstigen elektrischen Eigenschaften beinhaltet, erst zu einem Zeitpunkt t₄, d.h. nach dem spätest zulässigen Zeitpunkt t_{SW}.

Es ist daher die Aufgabe der vorliegenden Erfindung, eine Unterspannungsauslöseschaltung zu schaffen, die unabhängig von den Fertigungstoleranzen der Unterspannungsauslösespule eine zuverlässige Auslösung gewährleistet.

Diese Aufgabe wird erfindungsgemäß durch eine Unterspannungsauslöseschaltung mit den im Patentanspruch 1 angegebenen Merkmalen gelöst.

Die Erfindung schafft eine Unterspannungsauslöseschaltung mit einer Unterspannungsauslösespule, die durch einen durchfließenden Halte-Spulenstrom gehalten wird, und mit einer Spulenstrom-Überwachungsschaltung, die bei einem Abfallen des durch die Unterspannungsauslösespule fließenden Halte-Spulenstromes das Abfallen des Halte-Spulenstromes beschleunigt.

Bei einer bevorzugten Ausführungsform der Unterspannungsauslöseschaltung ist eine Unterspannungsauslösespule zum Auslösen eines Leitungsschutzschalters vorgesehen.

Bei einer weiteren bevorzugten Ausführungsform der Unterspannungsauslöseschaltung weist diese eine Spulenstromüberwachungsschaltung mit einen Transistor auf.

Bei einer weiteren bevorzugten Ausführungsform der Unterspannungsauslöseschaltung ist der Transistor ein Bipolartransistor.

Bei einer weiteren bevorzugten Ausführungsform der Unterspannungsauslöseschaltung ist die Kollektor-Emitterstrecke des Transistors parallel zu der Unterspannungsauslösespule geschaltet.

Bei einer weiteren bevorzugten Ausführungsform der Unterspannungsauslöseschaltung wird der Transistor bei einem Abfall des Halte-Spulenstromes leitend.

Bei einer weiteren bevorzugten Ausführungsform der Unterspannungsauslöseschaltung weist die Spulenstromüberwachungsschaltung einen ersten Widerstand und eine Z-Diode auf, welche in Reihe geschaltet sind, wobei der Verbindungsknoten, an dem der erste Widerstand mit der Z-Diode verbunden ist, an die Basis des Transistors angeschlossen ist.

Bei einer weiteren bevorzugten Ausführungsform der Unterspannungsauslöseschaltung weist die Spulenstromüberwachungsschaltung einen zweiten Widerstand auf, der mit Emitteranschluss des Transistors verbunden ist.

Eine weitere bevorzugte Ausführungsform der Unterspannungsauslöseschaltung wird mit einer Betriebs-Gleichspannung zur Erzeugung des Halte-Spulenstromes versorgt.

Bei einer weiteren bevorzugten Ausführungsform der Unterspannungsauslöseschaltung wird die Betriebs-Gleichspannung durch eine Spannungsversorgungsschaltung erzeugt.

Bei einer weiteren bevorzugten Ausführungsform der Unterspannungsauslöseschaltung ist die Spannungsversorgungsschaltung mit mindestens einem Phasenleiter und dem Neutralleiter N verbunden.

Bei einer weiteren bevorzugten Ausführungsform der Unterspannungsauslöseschaltung wird durch die Spannungsversorgungsschaltung die zwischen einem Phasenleiter und dem Neutralleiter anliegende Wechselspannung gleichrichtet, wobei die gleichgerichtete Wechselspannung einen Kondensator zur Erzeugung der Betriebsgleichspannung für die Unterspannungsauslösespule auflädt.

Eine weitere bevorzugte Ausführungsform der Unterspannungsauslöseschaltung weist eine Spannungsversorgungsschaltung auf, an die drei Phasenleiter und dem Neutralleiter angeschlossen ist.

Bei einer weiteren bevorzugten Ausführungsform der Unterspannungsauslöseschaltung sind die Phasenleiter über Widerstände mit einem Sternpunkt verbunden.

Bei einer weiteren bevorzugten Ausführungsform der Unterspannungsauslöseschaltung wird eine an dem Sternpunkt auftretende Wechselspannung durch eine Gleichrichterschaltung gleichgerichtet und lädt zum Erzeugen einer Gleichspannung einen Kondensator zeitverzögert auf, wobei der Kondensator mit einem Steueranschluss eines Transistors verbunden ist, der beim Anliegen einer Gleichspannung durchschaltet und die Betriebsgleichspannung für die Unterspannungsauslösespule kurzschließt.

Im weiteren werden bevorzugte Ausführungsformen der erfindungsgemäßen Unterspannungsauslöseschaltung unter Bezugnahme auf die beigefügten Figuren zur Erläuterung erfindungswesentlicher Merkmale beschrieben.

Es zeigen:
Fig. 1 eine Unterspannungsauslöseschaltung nach dem Stand der Technik;
Fig. 2 ein Diagramm zur Erläuterung der der Erfindung zugrundeliegenden Problematik;
Fig. 3 eine erste Ausführungsform der erfindungsgemäßen Unterspannungsauslöseschaltung;
Fig. 4 eine zweite Ausführungsform der erfindungsgemäßen Unterspannungsauslöseschaltung.

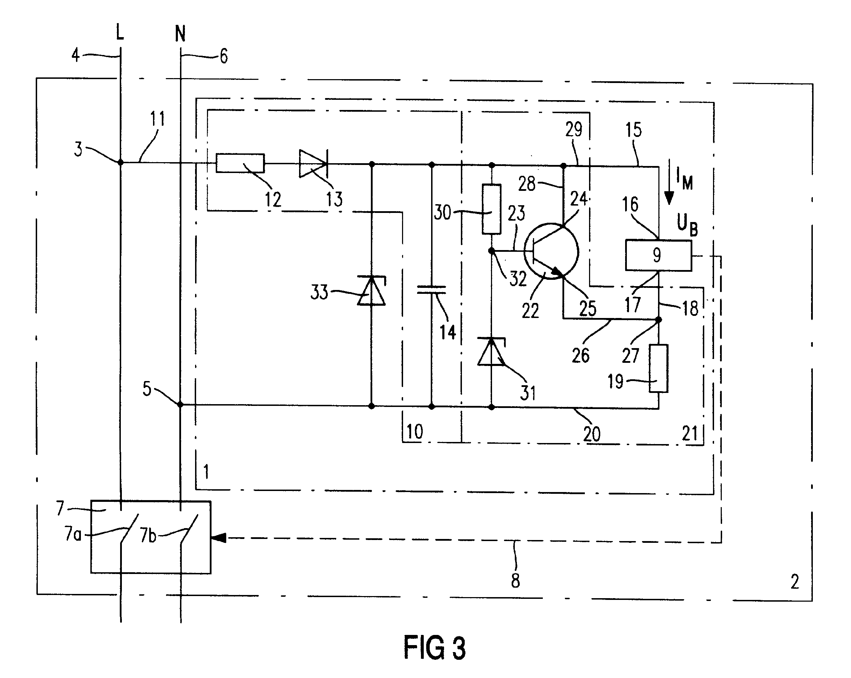

Fig. 3 zeigt eine einphasige Ausführung der erfindungsgemäßen Unterspannungsauslöseschaltung 1 innerhalb eines Unterspannungsauslösers 2. Die Unterspannungsauslöseschaltung 1 ist an einem Knoten 3 an einen Phasenleiter 4 und an einem Knoten 5 an einen Nullleiter 6 angeschlossen. An dem Phasenleiter 4 und dem Nullleiter 6 ist ein Schaltbauelement 7 angeschlossen, dessen Schalter 7a, 7b zur Unterbrechung der Leiter 4, 6 über eine Leitung 8 mechanisch ansteuerbar sind.

Die Unterspannungsauslöseschaltung 1 enthält eine Unterspannungsauslösespule 9, die in einem normalen Betriebsmodus durch eine Betriebsgleichspannung U_{B} versorgt wird. Die Betriebsgleichspannung wird durch eine Spannungsversorgungsschaltung 10 erzeugt. Die Spannungsversorgungsschaltung 10 ist über eine Leitung 11 an dem Knoten 3 mit dem Phasenleiter 4 und über eine Leitung 20 an dem Knoten 5 mit dem Neutralleiter 6 verbunden und richtet die anliegende Wechselspannung über einen Widerstand 12 und eine Gleichrichterdiode 13 gleich. Die gleichgerichtete Wechselspannung dient zum Aufladen eines Kondensators 14 innerhalb der Spannungsversorgungsschaltung 10, der die gleichgerichtete Wechselspannung glättet und die Unterspannungsauslösespule 9 über eine Leitung 15 an einem Anschluss 16 mit der Betriebsgleichspannung U_{B} versorgt. Der andere Anschluss 17 der Unterspannungsauslösespule 9 liegt über eine Leitung 18, einem Widerstand 19 und eine Leitung 20 an dem Nullleiter 6 an. Durch die Unterspannungsauslösespule 9 fließt in einem normalen Betriebsmodus ein Halte-Spulenstrom I_{H}, der dafür sorgt, dass die Unterspannungsauslösespule 9 nicht auslöst. Sinkt die momentane Spannung der an dem Phasenleiter 4 anliegenden Spannung unter einen Grenzwert ab, sinkt auch die Betriebsgleichspannung U_{B} zur Versorgung der Unterspannungsauslösespule 9 unter einen Schwellenwert ab, so dass der Halte-Spulenstrom I_{H} abfällt. Sobald der Halte-Spulenstrom einen vorgegebenen Minimalwert unterschreitet, löst die Unterspannungsauslösespule 9 aus und öffnet Schalter 7a, 7b.

Die erfindungsgemäße Unterspannungsauslöseschaltung 1 enthält die Spulenstromüberwachungsschaltung 21, die bei einem Abfallen des durch die Unterspannungsauslösespule 9 fließenden Halte-Spulenstromes I_{H} das Abfallen des Halte-Spulenstromes beschleunigt. Die Spulenstromüberwachungsschaltung 21 enthält hierzu einen Transistor 22 mit einem Basisanschluss 23, einem Kollektoranschluss 24 und'einem Emitteranschluss 25. Bei der in Fig. 3 dargestellten Ausführungsform ist der Transistor 22 ein Bipolartransistor. Bei einer alternativen Ausführungsform ist der Transistor 22 ein Feldeffekttransistor. Der Emitteranschluss 25 des Transistors 22 ist über eine Leitung 2 an einem Knoten 27 mit der Leitung 18 verbunden. Der Kollektoranschluss 24 des Transistors 22 liegt über eine Leitung 28 an einem Knoten 29 an der Leitung 15 an. Zwischen der Leitung 15 und der Leitung 20 liegt eine Serienschaltung, die aus einem Widerstand 30 und einer Z-Diode 31 besteht, vorgesehen. Ein Verbindungsknoten 32 zwischen dem Widerstand 30 und der Z-Diode 31 ist mit dem Basisanschluss 23 des Transistors 22 verbunden. Die Kollektoremitterstrecke zwischen dem Kollektoranschluss 24 und dem Emitteranschluss 25 des Transistors 22 ist parallel zu der Unterspannungsauslösespule 9 geschaltet.

Die Unterspannungsauslöseschaltung 1 enthält neben der Unterspannungsauslösespule 9, der Spannungsversorgungsschaltung 10 und der Spulenstromüberwachungsschaltung 21 zusätzlich eine weitere Z-Diode 33 zur Spannungsbegrenzung.

Die Spulenstromüberwachungsschaltung 21 überwacht den in die Unterspannungsauslösespule 9 fließende Halte-Spulenstrom I_{H}, wobei sie ein Abfallen des Halte-Spulenstromes I_{H} beschleunigt. Ist der Halte-Spulenstrom I_{H} durch die Unterspannungsauslösespule 9 ausreichend hoch, sperrt der Transistor 22, da der Spannungsabfall über den Emitter-Widerstand 19 höher ist als die Spannung an der Z-Diode 31. Sinkt der durch die Unterspannungsauslösespule 9 fließende Halte-Strom I_{H}, der auch durch den Emitterwiderstand 19 fließt, ab, sinkt die Spannung, die an dem Widerstand 19 abfällt, so dass der Transistor 22 langsam leitend wird bzw. aufgesteuert wird. Hierdurch fließt ein Teilstrom über die Kollektoremitterstrecke des Transistors 22 und reduziert zusätzlich den durch die Unterspannungsauslösespule 9 fließenden Haltestrom. Erreicht die an dem Widerstand 19 anliegende Spannung einen Spannungswert, der kleiner ist als die an der Z-Diode 31 anliegende Spannung abzüglich der Basisemitterspannung zwischen dem Basisanschluss 22 und dem Emitteranschluss 25 des Transistors 22, schließt der Transistor 22 die Überspannungsauslösespule 9 vollständig kurz.

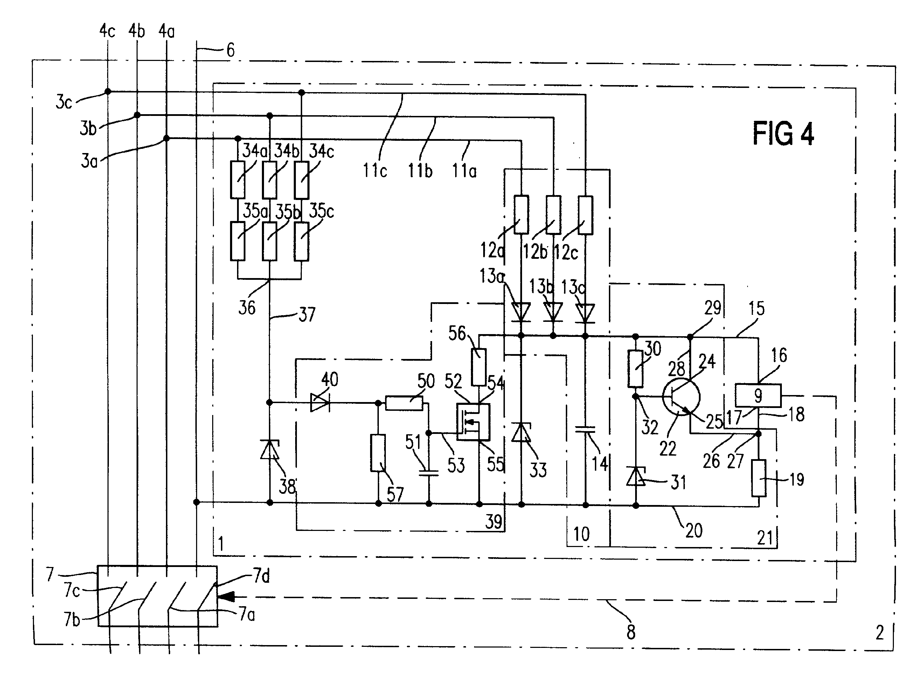

Fig. 4 zeigt eine weitere Ausführungsform der erfindungsgemäßen Unterspannungsauslöseschaltung 1 für drei Phasenleitungen 4a, 4b, 4c. Die Spannungsversorgungsschaltung 10 ist jeweils über einen Widerstand und eine in Reihe geschaltete Gleichrichter-Diode mit bei allen drei Phasenleitern 4a, 4b, 4c über Leitungen 11a, 11b, 11c und über die Leitung 20 mit dem Neutralleiter 6 verbunden.

Die Phasenleiter 4a, 4b, 4c sind ferner über Widerstände 34, 35 an einem Sternpunkt 36 angeschlossen. Der Sternpunkt 36 ist über eine Leitung 37 und eine Z-Diode 38 mit dem Nullleiter 6 verbunden. Der Sternpunkt 6 bildet einen künstlichen Nullpunkt. Im normalen Betriebszustand liegt zwischen dem Sternpunkt 36 und dem Neutralleiter 6 keine Wechselspannung an. Fehlt eine Phase, beispielsweise durch Unterbrechung eines Phasenleiters, liegt an dem Sternpunkt 36 eine Wechselspannung an. Diese Wechselspannung wird durch eine Erfassungsschaltung bzw. Detektionsschaltung 39 erfasst. Die Erfassungsschaltung 39 enthält eine Diode 40 zum Gleichrichten einer an dem Sternpunkt 36 anliegenden Wechselspannung. Die gleichgerichtete Wechselspannung wird über einen Widerstand 50 einem Kondensator 51 zugeführt und lädt diesen auf. Der Widerstand 50 und Kondensator bilden ein RC-Glied und sorgen für eine ausreichende zeitliche Verzögerung Δt, bis die an dem Kondensator 51 anliegende Spannung einen Transistor 52 durchschaltet. Die zeitliche Verzögerung Δt verhindert, dass eine kurzzeitige Unterbrechung einer Spannungsphase einen Auslösevorgang hervorruft. Der Transistor 52 ist bei der in Fig. 4 gezeigten Ausführungsform ein selbstsperrender NMOS Feldeffekttransistor mit einem Gateanschluss 53, einem Sourceanschluss 54 und einem Drainanschluss 55. Liegt an dem Sternpunkt 36 eine Wechselspannung an, wird der Kondensator 51 über den Widerstand 50 aufgeladen und die Spannung an dem Gateanschluss 53 des Feldeffekttransistors 52 nimmt zu. Ist die Spannung an dem Kondensator 51 ausreichend um den Feldeffekttransistor 52 durchzuschalten, schließt dieser über einen Widerstand 56 die an Leitung 15 anliegende Betriebsgleichspannung U_{B} für die Unterspannungsauslösespule 9 kurz. Dies bewirkt ein Absinken des Haltestroms I_{H}, wodurch die Unterspannungsauslösespule 9 ausgelöst wird. Dabei wird das Abfallen des Haltespulenstromes durch die Spulenstromüberwachungsschaltung 21 beschleunigt. Der Widerstand 56 gewährleistet, dass der zulässige Stossstrom durch den Transistor 52 nicht überschritten wird. Die Erfassungsschaltung 39 enthält ferner einen Entladewiderstand 57 zum Entladen des Kondensators 51.

Fig. 2 verdeutlicht den Vorteil der erfindungsgemäßen Unterspannungsauslöseschaltung 1 gegenüber einer herkömmlichen Unterspannungsauslöseschaltung. Die Spulenstromüberwachungsschaltung 21 beschleunigt bei einem Abfallen des durch die Unterspannungsauslösespule 9 fließenden Halte-Spulenstromes das Abfallen des Halte-Spulenstromes I_{H}. Sinkt die momentane Spannung an mindestens einen der Phasenleiter 4 zum Zeitpunkt t₀ ab, kommt es daher bei der erfindungsgemäßen Unterspannungsauslöseschaltung 1 zu einem Auslösevorgang zwischen den Zeitpunkten t_{1,} t₂, wobei dieser zeitliche Abschaltbereich von den Fertigungstoleranzen der Unterspannungsauslösespule 9 abhängt. Während der Abschaltbereich der erfindungsgemäßen Unterspannungsauslöseschaltung 1 zwischen den Zeitpunkten t₁, t₂ liegt, liegt der Abschaltbereich bei einer herkömmlichen Unterspannungsauslöseschaltung, die keine Spulenstromüberwachungsschaltung 21 enthält, zwischen den Zeitpunkten t₃, t₄. Aufgrund Fertigungstoleranzen kann es bei einer herkömmlichen Unterspannungsauslöseschaltung vorkommen, dass der Auslösevorgang zu spät erfolgt.

Die erfindungsgemäße Unterspannungsauslöseschaltung 1 ermöglicht den Einbau einer Unterspannungsauslösespule 9 mit einem relativ breiten Herstellungstoleranzbereich, wobei gleichzeitig garantiert ist, dass die Auslösung oberhalb eines bestimmten Schwellenwertes erfolgt, der beispielsweise bei 20 % der Nennspannung Uₙ liegt. Die erfindungsgemäße Unterspannungsauslöseschaltung 1 gewährleistet daher eine zuverlässige Auslösung innerhalb der vorgeschriebenen Abschaltgrenzen.

Bei der erfindungsgemäßen Unterspannungsauslöseschaltung 1 kann eine Unterspannungsauslösespule 9 in einem relativ großen Fertigungstoleranzbereich eingesetzt werden. Eine derartige Unterspannungsauslösespule 9 mit einem großen Toleranzbereich ist relativ kostengünstig herstellbar, so dass die Herstellungskosten der Unterspannungsauslöseschaltung 1 insgesamt relativ niedrig sind.

Ein weiterer Vorteil der erfindungsgemäßen Unterspannungsschaltung 1 besteht darin, dass der Auslösevorgang schneller ist als bei einer herkömmlichen Unterspannungsauslöseschaltung, so dass sich die Unterspannungsauslöseschaltung 1 für Anwendungen eignet, die eine besonders kurze Reaktionszeit zwischen dem auslösenden Ereignis und dem Auslösevorgang erfordern.

## Patentansprüche

1. Unterspannungsauslöseschaltung mit einer Unterspannungsauslösespule (9), die durch einen hindurchfließenden Halte-Spulenstrom gehalten wird, und mit einer Spulenstromüberwachungsschaltung (21), die bei einem Abfallen des durch die Unterspannungsauslösespule (9) hindurchfließenden Halte-Spulenstromes (I_{H}) das Abfallen des Halte-Spulenstromes beschleunigt.

2. Unterspannungsauslöseschaltung nach Anspruch 1,
**dadurch gekennzeichnet, dass**
die Unterspannungsauslösespule (9) zum Auslösen eines Schutzschalters (7) vorgesehen ist.

3. Unterspannungsauslöseschaltung nach Anspruch 1 oder 2,
**dadurch gekennzeichnet, dass**
die Spulenstromüberwachungsschaltung (21) einen Transistor (22) aufweist.

4. Unterspannungsauslöseschaltung nach einem der vorangehenden Ansprüche,
**dadurch gekennzeichnet, dass**
der Transistor (22) ein Bipolartransistor ist.

5. Unterspannungsauslöseschaltung nach einem der vorangehenden Ansprüche,
**dadurch gekennzeichnet, dass**
die Kollektor-Emitterstrecke des Transistors (22) parallel zu der Unterspannungsauslösespule (9) geschaltet ist.

6. Unterspannungsauslöseschaltung nach einem der vorangehenden Ansprüche,
**dadurch gekennzeichnet, dass**
der Transistor (22) bei einem Abfallen des Halte-Spulenstromes leitend wird.

7. Unterspannungsauslöseschaltung nach einem der vorangehenden Ansprüche,
**dadurch gekennzeichnet, dass**
in der Spulenstromüberwachungsschaltung (21) ein erster Widerstand (30) und eine Zehnerdiode (31) in Reihe verschaltet sind, wobei der Knoten (32), an dem der Widerstand (30) und die Zehnerdiode (31) miteinander verbunden sind, an die Basis des Transistors (22) angeschlossen ist.

8. Unterspannungsauslöseschaltung nach einem der vorangehenden Ansprüche,
**dadurch gekennzeichnet, dass**
die Spulenstromüberwachungsschaltung (21) einen zweiten Widerstand (19) aufweist, der mit dem Emitteranschluss (25) des Transistors (22) verbunden ist.

9. Unterspannungsauslöseschaltung nach einem der vorangehenden Ansprüche,
**dadurch gekennzeichnet, dass**
die Unterspannungsauslösespule (9) mit einer Betriebs-Gleichspannung (U_{B}) zur Erzeugung des Halte-Spulenstromes versorgt wird.

10. Unterspannungsauslöseschaltung nach einem der vorangehenden Ansprüche,
**dadurch gekennzeichnet, dass**
die Betriebs-Gleichspannung (U_{B}) durch eine Spannungsversorgungsschaltung (10) erzeugt wird.

11. Unterspannungsauslöseschaltung nach einem der vorangehenden Ansprüche,
**dadurch gekennzeichnet, dass**
die Spannungsversorgungsschaltung (10) mit mindestens einem Phasenleiter (4) und dem Neutralleiter (6) verbunden ist.

12. Unterspannungsauslöseschaltung nach einem der vorangehenden Ansprüche,
**dadurch gekennzeichnet, dass**
die Spannungsversorgungsschaltung (10) die zwischen dem Phasenleiter (4) und dem Neutralleiter (6) anliegende Wechselspannung gleichrichtet und einen Kondensator (14) enthält, der mit der gleichgerichteten Wechselspannung zur Erzeugung der Betriebs-Gleichspannung (U_{B}) aufgeladen wird.

13. Unterspannungsauslöseschaltung nach einem der vorangehenden Ansprüche,
**dadurch gekennzeichnet, dass**
die Spannungsversorgungsschaltung (10) an drei Phasenleiter (4a, 4b, 4c) und dem Neutralleiter (6) angeschlossen ist.

14. Unterspannungsauslöseschaltung nach Anspruch 13,
**dadurch gekennzeichnet, dass**
die drei Phasenleiter (4a, 4b, 4c) über Widerstände (34, 35) mit einem Sternpunkt (36) verbunden sind.

15. Unterspannungsauslöseschaltung nach einem der vorangehenden Ansprüche,
**dadurch gekennzeichnet, dass**
eine zwischen dem Sternpunkt (36) und dem Neutralleiter (6) aufgetretene Wechselspannung durch eine Erfassungsschaltung (39) erfasst wird, wobei die Erfassungsschaltung (39) die auftretende Wechselspannung durch eine Gleichrichterschaltung (40) gleichrichtet und zum Erzeugen einer Gleichspannung einen Kondensator (51) zeitverzögert auflädt, der mit einem Steueranschluss (53) eines Transistors (52) verbunden ist, der zum Kurzschließen der Betriebsgleichspannung (U_{B}) für die Unterspannungsauslösespule (9) durchschaltet, wenn die an den Kondensator (51) anliegende Gleichspannung einen Schwellenwert überschreitet.
